# EUROPEAN PATENT SPECIFICATION

(11) **EP 0 750 010 B1**
(45) Date of publication and mention of the grant of the patent: **10.11.1999**
(21) Application number: 96109866.2
(22) Date of filing: 19.06.1996
(51) Int. Cl.: C08K 5/405, C08L 11/00

(54) **Power transmission belt**
Treibriemen
Courroie de transmission

(30) Priority: 20.06.1995 JP 15328695
(43) Date of publication of application: 27.12.1996
(73) Proprietor: Bando Chemical Industries, Ltd., Kobe-shi, Hyogo-ken (JP)
(72) Inventor: Tachibana, Hiroyuki, c/o Bando Chemical Ind., Ltd., Kobe-shi, Hyogo-ken (JP)
(74) Representative: Tiedtke, Harro, Dipl.-Ing.

(56) References cited:
- EP-A- 0 175 245
- FR-A- 1 177 848

## Description

The present invention relates to a power transmission belt, and more particularly to a power transmission belt such as a V-ribbed belt or a V-belt.

A power transmission belt has been used for an engine or a motor of industrial machines, automobiles, ships and the like.

As properties required for the power transmission belt, there have been known oil resistance, thermal resistance, flexibility and the like. When chloroprene rubber is used in rubber parts of the belt in order to impart the above properties to the belt, stickiness is generated in the rubber parts during working of the belt, and strange sound is generated between the belt and a pulley.

In order to inhibit the generation of strange sound, it has been proposed to use in the rubber parts of the power transmission belt a rubber composition having a heightened crosslinking density prepared by adding a vulcanizing agent such as zinc oxide or magnesium oxide, a vulcanization accelerator such as 2-mercaptoimidazoline and the like to chloroprene rubber (Japanese Unexamined Patent Publication No. 110944/1984). When the above rubber is used, the generation of strange sound can be inhibited in some degree because of the improvement of crosslinking density of the rubber. However, there is a problem that cracking is generated in the rubber parts made of the above rubber composition, so that the span of life of the power transmission belt (hereinafter referred to as "span of belt life") becomes short.

The present invention has been accomplished in consideration of the above prior art.

An object of the present invention is to provide a power transmission belt more inhibiting the generation of strange sound during working of the belt and having an increased span of belt life.

This and other objects of the present invention will become apparent from the description hereinafter.

In accordance with the present invention, there is provided a power transmission belt having rubber parts, at least one of which comprises a rubber composition containing a thiourea compound represented by the general formula (I): 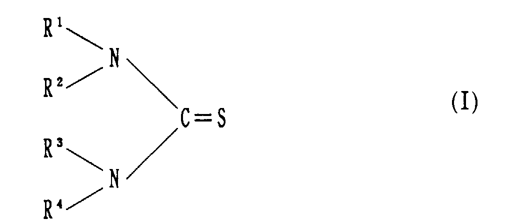 wherein each of R¹, R², R³ and R⁴ is independently hydrogen atom or a hydrocarbon group having 1 to 12 carbon atoms, and at least three of said R¹, R², R³ and R⁴ are hydrocarbon groups having 1 to 12 carbon atoms in an amount of 0.1 to 2.5 parts by weight based upon 100 parts by weight of sulfur-modified chloroprene rubber.

Fig. 1 is a schematic cross-sectional view of a V-ribbed belt which is one of the power transmission belts of the present invention.

Fig. 2 is a schematic cross-sectional view of a V-belt which is one of the power transmission belts of the present invention.

Fig. 3 is a schematic illustrative drawing of an apparatus which is used in measuring the span of belt life of the power transmission belts obtained in Examples of the present invention and Comparative Examples.

The power transmission belt of the present invention comprises, as mentioned above, rubber parts, at least one of which comprises a rubber composition containing a thiourea compound represented by the general formula (I): 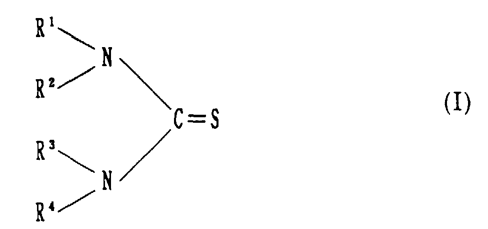 wherein each of R¹, R², R³ and R⁴ is independently hydrogen atom or a hydrocarbon group having 1 to 12 carbon atoms, and at least three of said R¹, R², R³ and R⁴ are hydrocarbon groups having 1 to 12 carbon atoms in an amount of 0.1 to 2.5 parts by weight based upon 100 parts by weight of sulfur-modified chloroprene rubber.

The power transmission belt of the present invention has a great characteristic, in particular, at the point that the thiourea compound represented by the general formula (I) is contained in the rubber composition. When the above thiourea compound is contained in the rubber composition, degree of crosslinking of the sulfur-modified chloroprene rubber is heightened, so that thermally ageing resistance is improved, and flexal fatigue of the rubber parts comprising the rubber composition is improved. Thereby, it is thought that the power transmission belt of the present invention inhibits the generation of strange sound during working of the belt and shows longer span of belt life.

In the thiourea compound represented by the above general formula (I), when at least three of the R¹, R², R³ and R⁴ are not hydrocarbon groups having 1 to 12 carbon atoms, strange sound is generated during working of the obtained power transmission belt and the span of belt life becomes short. Accordingly, in the present invention, at least three of the R¹, R², R³ and R⁴ are hydrocarbon groups having 1 to 12 carbon atoms.

As typical examples of the thiourea compound, there can be cited, for instance, a thiourea compound having an alkyl group having 1 to 12 carbon atoms, such as trimethylthiourea, triethylthiourea, tripropylthiourea, tributylthiourea, tetramethylthiourea, tetraethylthiourea, tetrapropylthiourea or tetrabutylthiourea; a thiourea compound having an aryl group having 6 to 12 carbon atoms, such as phenyldimethylthiourea, phenyltrimethylthiourea or phenyldiethylthiourea; and the like. These can be used alone or in an admixture thereof. Among these thiourea compounds, trimethylthiourea, triethylthiourea and tetramethylthiourea, in particular, trimethylthiourea and tetramethylthiourea can be preferably used in the present invention.

When the amount of the thiourea compound is too small, since strange sound comes to be generated, the amount of the thiourea compound is at least 0.1 part by weight, preferably at least 0.3 part by weight based upon 100 parts by weight of the sulfur-modified chloroprene rubber. When the amount of the thiourea compound is too large, since the span of belt life becomes short, the amount of the thiourea compound is at most 2.5 parts by weight, preferably at most 2 parts by weight based upon 100 parts by weight of the sulfur-modified chloroprene rubber.

In the present invention, there is one great characteristic at the point that the above sulfur-modified chloroprene rubber is used. In the present invention, because the sulfur-modified chloroprene rubber and the thiourea compound are used at the same time, there are advantages that the generation of strange sound is more inhibited during working of the belt and that the span of belt life becomes longer based upon their synergetic effects.

As typical examples of the sulfur-modified chloroprene rubber, there can be cited, for instance, sulfur-modified chloroprene rubber represented by the general fomrula (II): 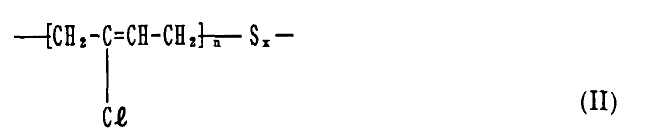 wherein x is an integer of 2 to 6 and n is 80x to 110x in which x is the same as the above; and the like. The concept of the above sulfur-modified chloroprene rubber includes generally so-called G-type Neoprene rubber. As typical examples of the G-type Neoprene rubber, there can be cited, for instance, Neoprene GS, Neoprene GNA, Neoprene GW and Neoprene GRT which are commercially available from DUPONT·SHOWA DENKO CO., LTD; and the like.

The rubber composition used in the present invention contains the sulfur-modified chloroprene rubber and the thiourea compound. Moreover, as occasion demands, carbon black and various additives can be contained in the rubber composition.

As typical examples of the above carbon black, there can be cited, for instance, furnace black such as HAF, MAF, FEF, SRF or GPF; thermal black such as FT or MT; and the like. Among them, the furnace black can be preferably used in the present invention.

In order to lower the abrasion loss of the rubber parts of the belt, which is caused by the contact with a pulley during working of the belt, it is desired that the amount of the carbon black is at least 20 parts by weight based upon 100 parts by weight of the sulfur-modified chloroprene rubber. From the viewpoint of the improvement of the span of belt life and flexal fatigue resistance, it is desired that the amount of the carbon black is at most 100 parts by weight based upon 100 parts by weight of the sulfur-modified chloroprene rubber.

As the above additive, there can be cited, for instance, a lubricant such as stearic acid; a crosslinking agent such as sulfur, an organic sulfur compound, a metal oxide such as zinc oxide or magnesium oxide or a metal peroxide; a vulcanization accelerator such as thiazoles, dithiocarbamates, guanidines or thiurams; a rubber antioxidant such as amines or phenols; a filler such as calcium carbonate, basic magnesium carbide, diatomaceous earth or clay; a plasticizer such as dimethyl phthalate, diethyl phthalate, dioctyl phthalate or dioctyl sulfonate; and the like. These can be used alone or in an admixture thereof.

There is no particular limitation in the amount of the additive. It is desired that the amount is properly adjusted to the desired amount according to the kind of the additive and the like.

The power transmission belt of the present invention is characterized in that at least one of the rubber parts comprises the above rubber composition. The constituent of the rubber parts in which the rubber composition is used varies depending upon the kind of the above power transmission belt. As its examples, for instance, bottom rubber of a V-belt or a V-ribbed belt and the like can be cited.

All of rubber components used in the power transmission belt of the present invention may be made of the above rubber composition. Also, the rubber component may be made of the combination of the above rubber composition and the other rubber which is usually used in a power transmission belt unless the objects of the present invention are hindered.

Then, the embodiments of the power transmission belt of the present invention will be explained referring to the following drawings.

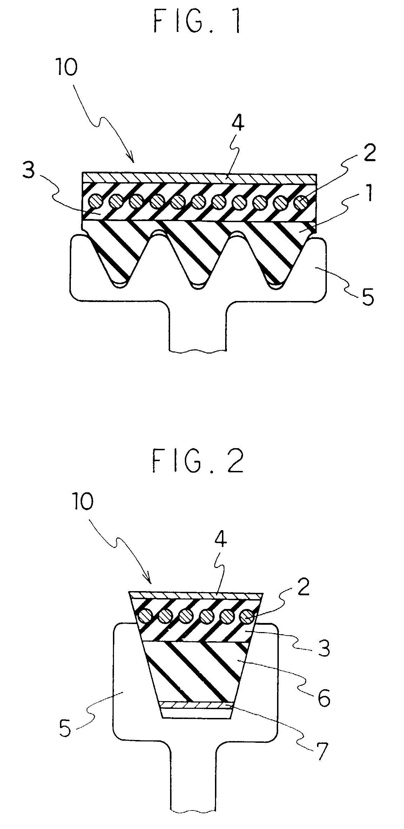

Fig. 1 is a schematic cross-sectional view of a V-ribbed belt which is one of the power transmission belts of the present invention. In Fig. 1, the bottom rubber 1 is laminated with an adhesive rubber layer 3 in which core wires 2 made of, for instance, polyester, aramid or the like are buried, and top canvas 4 such as rubber-spread canvas is adhered to the top surface of the adhesive rubber layer 3.

The above rubber composition can be used as a rubber component in the bottom rubber 1, the adhesive rubber layer 3 and the top canvas 4. In particular, when the rubber composition is used in the bottom rubber 1, there can be greatly inhibited the generation of strange sound of the bottom rubber 1, which is caused by the contact with the pulley 5 provided with the bottom of the bottom rubber 1 during working of the belt.

Fig. 2 is a schematic cross-sectional view of a V-belt which is one of the power transmission belts of the present invention. In Fig. 2, the bottom rubber 6 is laminated with the adhesive rubber layer 3 in which the core wires 2 made of, for instance, polyester, aramid or the like, and the top canvas 4 such as rubber-spread canvas is adhered to the top surface of the adhesive rubber layer 3, and bottom canvas 7 such as rubber-spread canvas is adhered to the bottom surface of the bottom rubber 6.

The above rubber composition can be used as a rubber component in the bottom rubber 6, the adhesive rubber layer 3, the top canvas 4 and the bottom canvas 7. In particular, when the rubber composition is used in the bottom rubber 6, there can be greatly inhibited the generation of strange sound of the bottom rubber 6, which is caused by the contact with the pulley 5 during working of the belt.

Thus, in the present invention, it is desired that the above rubber composition is used in the rubber parts of the power transmission belt, which are contacted with the pulley from the viewpoint that the generation of strange sound is inhibited.

In the power transmission belt of the present invention, the above rubber composition is used in at least one of the rubber parts. Accordingly, the power transmission belt inhibits the generation of strange sound of the belt, which is caused by the contact with the pulley during working of the belt, and the span of belt life becomes long, so that the power transmission belt can be preferably used for an engine or a motor of industrial machines, automobiles, ships and the like.

As aforementioned, the power transmission belt of the present invention is explained on the basis of Fig. 1 and Fig. 2. However, the present invention is not limited to only the embodiments described in the figures.

The power transmission belt of the present invention is more specifically described and explained by means of the following Examples. It is to be understood that the present invention is not limited to the Examples, and various changes and modifications may be made in the invention without departing from the spirit and scope thereof.

### Examples 1 to 7 and Comparative Examples 1 to 4

With 100 parts by weight of sulfur-modified chloroprene rubber (commercially available from DUPONT·SHOWA DENKO CO., LTD., trade name: Neoprene GRT), were mixed 50 parts by weight of carbon black FEF, 8 parts by weight of dioctyl sulfonate as a plasticizer, 5 parts by weight of zinc oxide and 4.8 parts by weight of magnecium oxide as crosslinking agents, and 1 part by weight of stearic acid as a lubricant. Therewith was mixed a thiourea compound shown in Table 1 in an amount (the amount being based upon 100 parts by weight of the sulfur-modified chloroprene rubber) shown in Table 1, and they were kneaded by means of a banbury mixer for about 5 minutes to give a rubber composition. In Comparative Example 1, a thiourea compound was not used.

Then, as shown in Fig. 1, the adhesive rubber layer 3 in which core wires 2 (polyester, diameter: 1 mm) were buried and the bottom rubber 1 were produced from the obtained rubber composition, and these were laminated with each other. Then, the top canvas 4 (rubber-spread canvas) was adhered to the top surface of the adhesive rubber layer 3 to give a power transmission belt.

The span of belt life, stickiness and generated sound as properties of the obtained power transmission belts, and elongation retention after ageing as a property of rubber materials, were examined in accordance with the following methods. The results are shown in Table 1.

### (1) Property of power transmission belt

### ① Span of belt life

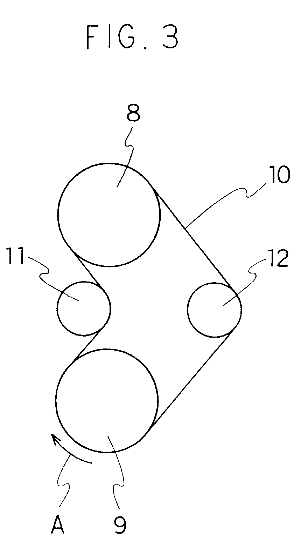

As shown in Fig. 3, a power transmission belt 10 is set on a driving pulley 8 having a diameter of 120 mm and a coupled driving pulley 9 having a diameter of 120 mm. Under the condition that an idle pulley 11 having a diameter of 70 mm and an idle pulley 12 having a diameter of 45 mm are applied to the power transmission belt 10 so that a load of the coupled driving pulley 9, set weight (tensile force) for the idle pulley 12 and a rotational frequency of the driving pulley 8 are adjusted to 16 PS, 85 kgf and 4900 rpm, respectively. The power transmission belt 10 is run in the direction of an arrow A shown in Fig. 3 in an atmosphere of 85°C, and the time of period until cracking is generated in the belt is measured and the time is defined as the span of belt life.

### ② Stickiness

The power transmission belt 10 shown in Fig. 3 is run in the same manner as the measuring method in the above item ① Span of belt life. After 3 hours passed, the existence of stickiness in the inside of the power transmission belt is examined.

### ③ Generated sound

The power transmission belt 10 shown in Fig. 3 is run in the same manner as the measuring method in the above item ① Span of belt life. After 1 hour passed, a microphone is arranged at the position which is 10 cm away from the pulley, and the sound pressure level is examined by means of a noise meter.

### (2) Property of rubber material

### ① Elongation retention after ageing

Under the condition that ageing temperature is 120°C and ageing period of time is 144 hours, the residual ratio (%) is examined in accordance with "Ageing test" prescribed in JIS (Japanese Industrial Standard) K 6301 and the ratio is defined as the elongation retention (%).

In Table 1, each code of thiourea compounds means the following, respectively.
TEMU: Tetramethylthiourea
TRMU: Trimethylthiourea
DEUR: N,N'-diethylthiourea
MIZ: 2-mercaptoimidazole

### Comparative Example 5

In Comparative Example 5, a rubber composition was prepared and a power transmission belt was produced in the same manner as in Example 1 except that 100 parts by weight of non-sulfur-modified chloroprene rubber (commercially available from DUPONT·SHOWA DENKO CO., LTD., trade name: Neoprene WRT) was used instead of 100 parts by weight of the sulfur-modified chloroprene rubber. The properties of the obtained power transmission belt and the property of the rubber material were examined in the same manner as in Example 1. The results are shown in Table 1.

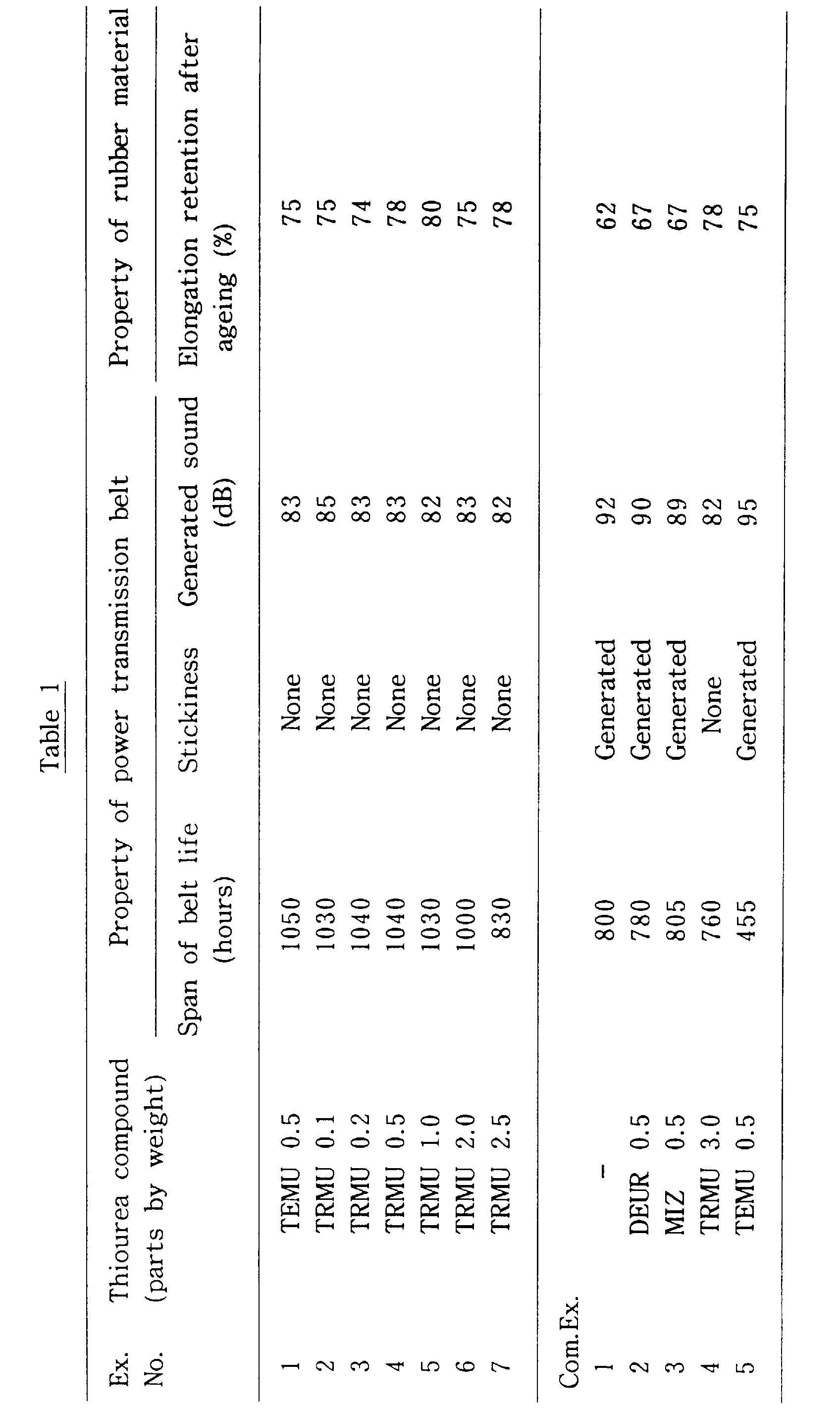

From the results shown in Table 1, it can be seen that when power transmission belts obtained in Examples 1 to 7 are used, stickiness is hardly generated during working of the belt, and generated sound (strange sound) during working of the belt is small, and the power transmission belts exhibit long span of belt life.

In addition to the ingredients used in the Examples, other ingredients can be used in the Examples as set forth in the specification to obtain substantially the same results.

A power transmission belt comprising rubber parts, at least one of which comprises a rubber composition containing a thiourea compound represented by the general formula (I): 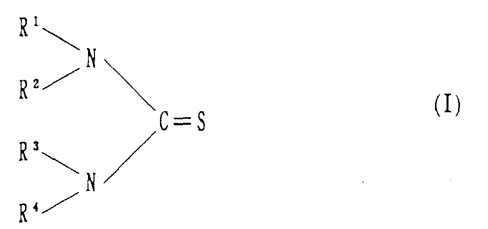 wherein each of R¹, R², R³ and R⁴ is independently hydrogen atom or a hydrocarbon group having 1 to 12 carbon atoms, and at least three of said R¹, R², R³ and R⁴ are hydrocarbon groups having 1 to 12 carbon atoms in an amount of 0.1 to 2.5 parts by weight based upon 100 parts by weight of sulfur-modified chloroprene rubber. The power transmission belt of the present invention inhibits the generation of strange sound during working of the belt and shows long span of belt life.

## Claims

1. A power transmission belt comprising rubber parts, at least one of which comprises a rubber composition containing a thiourea compound represented by the general formula (I): 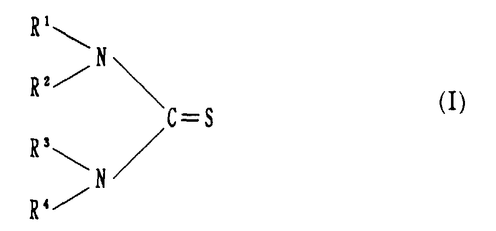 wherein each of R¹, R², R³ and R⁴ is independently hydrogen atom or a hydrocarbon group having 1 to 12 carbon atoms, and at least three of said R¹, R², R³ and R⁴ are hydrocarbon groups having 1 to 12 carbon atoms in an amount of 0.1 to 2.5 parts by weight based upon 100 parts by weight of sulfur-modified chloroprene rubber.

2. The power transmission belt of Claim 1, wherein one of said rubber parts is bottom rubber contacting with a pulley.

## Patentansprüche

1. Kraftübertragungsriemen, umfassend Gummiteile, von denen mindestens eines eine Gummizusammensetzung umfaßt, die eine Thioharnstoffverbindung, dargestellt durch die allgemeine Formel (I) 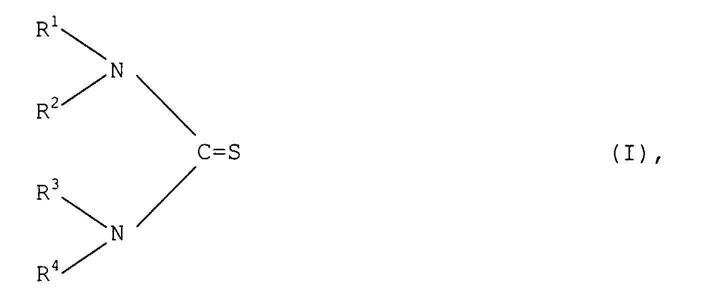 in der jedes von R¹, R², R³ und R⁴ unabhängig voneinander ein Wasserstoffatom oder eine Kohlenwasserstoffgruppe mit 1 bis 12 Kohlenstoffatomen ist, und mindestens drei von R¹, R², R³ und R⁴ Kohlenwasserstoffgruppen mit 1 bis 12 Kohlenstoffatomen sind, in einer Menge von 0,1 bis 2,5 Gewichtsteilen bezogen auf 100 Gewichtsteile schwefelmodifizierten Chloroprengummi enthält.

2. Kraftübertragungsriemen nach Anspruch 1, wobei eines der Gummiteile ein Trägergummi ist, der in Kontakt mit einer Riemenscheibe ist.

## Revendications

1. Courroie de transmission de puissance comprenant des parties de caoutchouc dont l'une au moins contient une composition de caoutchouc contenant un composé de thiourée représenté par la formule générale (I) : 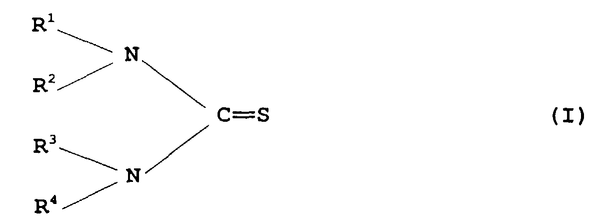 dans laquelle chacun des groupes R¹, R², R³ et R⁴ représente de manière indépendante un atome d'hydrogène ou un groupe hydrocarboné ayant 1 à 12 atomes de carbone, et trois au moins des groupes R¹, R², R³ et R⁴ sont constitués de groupes hydrocarbonés ayant 1 à 12 atomes de carbone en quantité comprise entre 0,1 et 2,5 parties en poids pour 100 parties en poids de caoutchouc de chloroprène modifié par du soufre.

2. Courroie de transmission de puissance selon la revendication 1, dans laquelle l'une des parties de caoutchouc est formée du caoutchouc de la partie inférieure qui est au contact d'une poulie.
